# EUROPÄISCHE PATENTANMELDUNG

(11) **EP 4 589 174 A1**
(43) Veröffentlichungstag der Anmeldung: **23.07.2025**
(21) Anmeldenummer: 25152504.4
(22) Anmeldetag: 17.01.2025
(51) Int. Cl.: F16H 49/00

(54) **GETRIEBEMODUL**

(30) Priorität: 19.01.2024 LU 506164
(71) Anmelder: Ovalo GmbH, 65555 Limburg (DE)
(72) Erfinder: Wolf, Alexander, 35794 Mengerskirchen (DE)
(74) Vertreter: Hoffmann, Jürgen

(57) **Zusammenfassung**

Die Erfindung betrifft ein Getriebemodul, das dazu ausgebildet ist, als fertig montierte und funktionsfähige Baueinheit einerseits an eine drehmomenteinspeisende Antriebsvorrichtung und andererseits an ein anzutreibendes System angekoppelt zu werden ohne hierfür Teile des Getriebemoduls demontieren zu müssen. Das Getriebemodul weist ein Getriebemodul-Drehmomentabstützelement zur drehmomentabstützenden Verbindung eines Antriebsvorrichtungs-Drehmomentabstützelements der drehmomenteinspeisenden Antriebsvorrichtung mit einem System-Drehmomentabstützelement des anzutreibenden Systems auf. Das Getriebemodul weist außerdem ein Spannungswellengetriebe mit einer Spannungswellengetriebe-Antriebswelle und einer Spannungswellengetriebe-Abtriebswelle auf, wobei die Spannungswellengetriebe-Antriebswelle dazu ausgebildet und bestimmt ist, mit einer Abtriebswelle der drehmomenteinspeisenden Antriebsvorrichtung drehfest verbunden zu werden, und wobei die Spannungswellengetriebe-Abtriebswelle dazu ausgebildet und bestimmt ist, mit einer Antriebswelle des anzutreibenden Systems drehfest verbunden zu werden. Die Spannungswellengetriebe-Abtriebswelle ist mittels wenigstens eines Abtriebswellen-Wälzlagers direkt oder indirekt relativ zu dem Getriebemodul-Drehmomentabstützelement und/oder direkt oder indirekt relativ zu der Spannungswellengetriebe-Antriebswelle rotierbar gelagert. Das Getriebemodul weist außerdem wenigstens einen Messaufnehmer auf, der dazu ausgebildet und angeordnet ist, eine getriebespezifische Eingangsgröße zu erfassen und ein elektrisches Messsignal zu erzeugen. Das Getriebemodul weist außerdem eine an einem Bauteil des Getriebemoduls befestigte Auswerteelektronik auf, die elektrisch an den Messaufnehmer angeschlossen ist und die dazu ausgebildet, aus dem elektrischen Messsignal eine Ausgangsgröße zu erzeugen und auszugeben.

## Beschreibung

Die Erfindung betrifft ein Getriebemodul, das dazu ausgebildet ist, als fertig montierte und funktionsfähige Baueinheit einerseits an eine drehmomenteinspeisende Antriebsvorrichtung und andererseits an ein anzutreibendes System angekoppelt zu werden.

Die Erfindung betrifft einen Aktuator, der ein solches Getriebemodul und eine drehmomenteinspeisende Antriebsvorrichtung aufweist.

Die Erfindung betrifft darüber hinaus eine Maschine die einen solchen Aktuator sowie ein anzutreibendes System aufweist.

Oftmals werden Spannungswellengetriebe eingesetzt, um Antriebsenergie von einer drehmomenteinspeisenden Antriebsvorrichtung an ein anzutreibendes System zu übertragen.

Ein Spannungswellengetriebe besitzt zumeist ein starres, ringförmiges, innenverzahntes Zahnrad, das als Circularspline bezeichnet wird, und ein flexibles außenverzahntes Zahnrad, das im Inneren des starren innenverzahnten Zahnrads angeordnet ist und das als Flexspline bezeichnet wird. Der Circularspline und der Flexspline weisen eine unterschiedliche Zahl von Zähnen auf. Der Flexspline kann in Form eines Flextopfes ausgebildet sein. Der Wellengenerator verformt den Flexspline zu einer ovalen, insbesondere elliptischen, Form und bringt so die Außenverzahnung des Flexsplines mit der Innenverzahnung des Circularsplines an jedem Ende der Ellipsen-Hauptachse miteinander in Eingriff. Ein Spannungswellengetriebe mit einem Flexspline in Form eines Flextopfes ist beispielsweise aus US 6 050 155 A bekannt. Aus DE 11 2011 105 253 T5 und aus DE 11 2013 004 710 T5 sind Spannungswellengetriebe vom Zylinderhuttyp bekannt, bei denen der Flexspline eine Hutform aufweist.

Es gibt auch Spannungswellengetriebe in Ringbauweise, bei denen der Flexspline ringförmig ausgebildet ist. Zumeist weisen diese Spannungswellengetriebe ein weiteres starres, ringförmiges, innenverzahntes Zahnrad auf, das als Dynamicspline bezeichnet wird. Der Dynamicspline steht ebenfalls mit dem Flexspline in Zahneingriff. Der Dynamicspline und der Circularspline weisen eine unterschiedliche Zahl von Zähnen auf.

US 3,005,358 offenbart ein Spannungswellengetriebe mit einem Flexspline und einem Circularspline sowie einem Wellengenerator für verschiedene Anwendungen, wobei der Wellengenerator ortsfest rotierbar gelagert ist.

WO 2006/004892 A1 offenbart eine motorunterstützte Lenkvorrichtung, die ein Spannungswellengetriebe mit einem Wellengenerator beinhaltet. Der Wellengenerator ist in der Lenkvorrichtung mittels mehrerer Kugellager ortsfest rotierbar gelagert.

DE 1 135 259 B offenbart ein Spannungswellengetriebe, in verschiedenen Ausführungsformen, wobei der Wellengenerator bei allen Ausführungen ortsfest rotierbar gelagert ist.

Aus EP 4 257 848 A1 ist ein Getriebesystem bekannt, das ein Drehmomentabstützelement und ein Dreiwellengetriebe aufweist, welches wenigstens ein, insbesondere ringförmiges, Zahnrad aufweist. Das Zahnrad ist als Flansch ausgebildet oder weist einen Flansch auf und ist mittels eines elastisch verformbaren Koppelbauteils, das einen mit dem Flansch drehfest verbundenen Gegenflansch aufweist, an dem Drehmomentabstützelement festgelegt.

Aus DE 10 2010 037 226 A1 ist ein Aktuator mit einem Spannungswellengetriebe und einem Steuerungs- und Sensormodul bekannt. Das Steuerungs- und Sensormodul hat ein eigenes Gehäuse und weist zumindest einen Drehwinkelsensor und eine Steuerungselektronik auf.

Es ist die Aufgabe dervorliegenden Erfindung, ein Getriebemodul anzugeben, das eine besonders präzise Übertragung einer Rotationsbewegung von einer drehmomenteinspeisenden Antriebsvorrichtung zu einem anzutreibenden System erlaubt.

Die Aufgabe wird durch ein Getriebemodul mit den Merkmalen des Anspruchs 1 gelöst.

Das Getriebemodul weist ein Getriebemodul-Drehmomentabstützelement zur direkten oder indirekten drehmomentabstützenden Verbindung mit einem Antriebsvorrichtungs-Drehmomentabstützelement der drehmomenteinspeisenden Antriebsvorrichtung und/oder mit einem System-Drehmomentabstützelement des anzutreibenden Systems auf.

Das Getriebemodul weist außerdem ein Spannungswellengetriebe mit einer Spannungswellengetriebe-Antriebswelle und einer Spannungswellengetriebe-Abtriebswelle auf, wobei die Spannungswellengetriebe-Antriebswelle dazu ausgebildet und bestimmt ist, mit einer Abtriebswelle der drehmomenteinspeisenden Antriebsvorrichtung drehfest verbunden zu werden, und wobei die Spannungswellengetriebe-Abtriebswelle dazu ausgebildet und bestimmt ist, mit einer Antriebswelle des anzutreibenden Systems drehfest verbunden zu werden.

Mittels des Getriebemodul-Drehmomentabstützelements kann sich ein Antriebsvorrichtungs-Drehmomentabstützelement einer drehmomenteinspeisenden Antriebsvorrichtung, das beispielsweise als Motorgehäuse ausgebildet sein kann, direkt oder indirekt an dem System-Drehmomentabstützelement, das beispielsweise als Systemgehäuse ausgebildet sein kann, abstützen, was es ermöglicht, ein Drehmoment von der Abtriebswelle der drehmomenteinspeisenden Antriebsvorrichtung zu der Antriebswelle des anzutreibenden Systems zu übertragen.

Die Spannungswellengetriebe-Abtriebswelle ist mittels wenigstens eines Abtriebswellen-Wälzlagers direkt oder indirekt relativ zu dem Getriebemodul-Drehmomentabstützelement und/oder direkt oder indirekt relativ zu der Spannungswellengetriebe-Antriebswelle rotierbar gelagert. Dies hat den besonderen Vorteil, dass eine besonders präzise Übertragung der Drehbewegung ermöglicht ist.

Das Getriebemodul weist außerdem wenigstens einen Messaufnehmer auf, der dazu ausgebildet und angeordnet ist, eine getriebespezifische Eingangsgröße zu erfassen und ein elektrisches Messsignal zu erzeugen. Hierdurch können für den präzisen Betrieb des Getriebemoduls relevante Eingangsgrößen unmittelbar in dem Getriebemodul erfasst und an eine Auswerteelektronik des Getriebemoduls weitergeleitet werden, die elektrisch an den Messaufnehmer angeschlossen ist und die dazu ausgebildet ist, aus dem elektrischen Messsignal eine Ausgangsgröße (insbesondere eine Ausgangsgröße, der eine Maßeinheit, insbesondere eine SI-Einheit, zugeordnet ist) zu erzeugen, die ausgegeben und/oder in einem Datenspeicher der Auswerteelektronik abgespeichert werden kann.

Insbesondere kann das erfindungsgemäße Getriebemodul zuverlässig überwacht werden, beispielsweise indem die Eingangsgröße fortlaufend kontinuierlich oder in (regelmäßigen oder unregelmäßigen) Zeitabständen erfasst wird, und es kann beispielsweise sehr frühzeitig festgestellt werden, ob ein Fehler vorliegt oder sich ein Fehler ankündigt. Darüber hinaus ermöglicht es das erfindungsgemäße Getriebemodul, während des laufenden Betriebs eine zuverlässige Prognose über sein künftiges Verhalten und/oder über eine künftige Eigenschaft des Getriebemoduls zu ermitteln. Beispielsweise ist es durch eine fortlaufende Erfassung der Eingangsgröße (vorzugsweise durch fortlaufende Erfassung der Eingangsgrößen mehrerer unterschiedlicher Messaufnehmer) möglich festzustellen, ob sich ein, beispielsweise verschleißbedingter und/oder lastbedingter, Fehlerzustand, insbesondere eine Beschädigung, des Getriebemoduls ankündigt. Auf diese Weise ist es möglich, vorausschauend Beschädigungen des Getriebemoduls zu vermeiden.

Bei einer vorteilhaften Ausführung weist das Spannungswellengetriebe einen Wellengenerator mit einem Antriebskern und einem radialflexiblen Wälzlager auf, wobei die Spannungswellengetriebe-Antriebswelle durch den Antriebskern gebildet ist. Eine solche Ausführung ist besonders robust. Es ist auch möglich, dass die Spannungswellengetriebe-Antriebswelle, beispielsweise mittels Steckverzahnung oder einer Flanschverbindung, drehfest mit dem Antriebskern verbunden ist.

Das Spannungswellengetriebe kann vorteilhaft einen Flexspline aufweisen, wobei die Spannungswellengetriebe-Abtriebswelle durch den Flexspline gebildet ist. Eine solche Ausführung ist besonders robust. Es ist alternativ auch möglich, dass die Spannungswellengetriebe-Abtriebswelle, beispielsweise mittels Steckverzahnung oder einer Flanschverbindung, drehfest mit dem Flexspline verbunden ist. Der Flexspline kann beispielsweise hutförmig oder topfförmig ausgebildet sein.

Bei einer vorteilhaften Ausführung weist das Spannungswellengetriebe einen Circularspline auf, der drehfest mit dem Getriebemodul-Drehmomentabstützelement verbunden ist oder der gemeinsam mit dem Getriebemodul-Drehmomentabstützelement einstückig aus einem einzigen Stück Rohmaterial hergestellt ist.

Bei einer besonderen Ausführung weist das Spannungswellengetriebe einen Circularspline und einen Dynamicspline auf, wobei die Zähnezahl der Verzahnung des Circularsplines sich von der Zähnezahl des Dynamicsplines unterscheidet. Bei einer solchen Ausführung ist der Flexspline vorzugsweise ringförmig ausgebildet und steht mit seiner Flexsplineverzahnung sowohl mit der Circularsplineverzahnung des Circularsplines und der Dynamicsplineverzahnung des Dynamicsplines in Zahneingriff.

Bei einer Ausführung, bei der das Spannungswellengetriebe einen Circularspline und einen Dynamicspline aufweist, kann vorteilhaft vorgesehen sein, dass die Spannungswellengetriebe-Abtriebswelle durch den Dynamicspline gebildet ist oder drehfest mit dem Dynamicspline verbunden ist, insbesondere während der Circularspline drehfest mit dem Getriebemodul-Drehmomentabstützelement verbunden ist oder der Circularspline gemeinsam mit dem Getriebemodul-Drehmomentabstützelement einstückig aus einem einzigen Stück Rohmaterial hergestellt ist. Alternativ ist es natürlich auch möglich, dass die Spannungswellengetriebe-Abtriebswelle durch den Circularspline gebildet ist oder drehfest mit dem Circularspline verbunden ist, insbesondere während der Dynamicspline drehfest mit dem Getriebemodul-Drehmomentabstützelement verbunden ist oder der Dynamicspline gemeinsam mit dem Getriebemodul-Drehmomentabstützelement einstückig aus einem einzigen Stück Rohmaterial hergestellt ist.

Das Getriebemodul-Drehmomentabstützelement kann vorteilhaft ein erstes Befestigungselement zur Befestigung des Getriebemodul-Drehmomentabstützelements an dem Antriebsvorrichtungs-Drehmomentabstützelement aufweisen. Alternativ oder zusätzlich kann das Getriebemodul-Drehmomentabstützelement ein zweites Befestigungselement zur Befestigung des Getriebemodul-Drehmomentabstützelements an dem System-Drehmomentabstützelement aufweisen.

Das erste Befestigungselement und/oder das zweite Befestigungselement können beispielsweise als Flansch mit Durchgangsbohrungen ausgebildet sein, was es ermöglicht das Getriebemodul-Drehmomentabstützelement mittels Befestigungsschrauben, die durch die Durchgangsbohrungen verlaufen, an dem Antriebsvorrichtungs-Drehmomentabstützelement bzw. dem System-Drehmomentabstützelement zu befestigen. Hierzu kann das Antriebsvorrichtungs-Drehmomentabstützelement bzw. das System-Drehmomentabstützelement ein Bauteil mit Gewindebohrungen aufweisen, in die die Befestigungsschrauben eingeschraubt sind. Alternativ ist es beispielsweise auch möglich, dass das erste Befestigungselement und/oder das zweite Befestigungselement als Steckverzahnung ausgebildet sind, die mit einer Gegensteckverzahnung des Antriebsvorrichtungs-Drehmomentabstützelements bzw. des System-Drehmomentabstützelements zusammen wirken, um eine drehfeste Steckverbindung herzustellen.

Bei einer vorteilhaften Ausführung ist die Spannungswellengetriebe-Antriebswelle mittels wenigstens eines Antriebswellen-Wälzlagers direkt oder indirekt relativ zu dem Getriebemodul-Drehmomentabstützelement rotierbar gelagert. Das Antriebswellen-Wälzlager ist vorzugsweise als Wälzlager ausgebildet. Insbesondere kann das Getriebemodul-Drehmomentabstützelement eine Wand mit einer, insbesondere mittig angeordneten, Aufnahme aufweisen, in der das Antriebswellen-Wälzlager befestigt ist. Die Wand ist bei einer besonders robusten Ausführung gemeinsam einstückig mit einer, insbesondere zylinderförmigen, Außenwand und des Getriebemodul-Drehmomentabstützelements hergestellt.

Vorzugsweise ist die Auswerteelektronik derart angeordnet und fest mit wenigstens einem anderen Bauteil des Getriebemoduls derart verbunden, dass das Getriebemodul als einstückige Baueinheit gehandhabt werden kann. Insbesondere ist das Getriebemodul vorzugsweise derart als einstückige Baueinheit, die auch die Auswerteelektronik beinhaltet, ausgebildet, dass es als (fertig montiertes) Ganzes, insbesondere als Teil einer erfindungsgemäßen Maschine, in ein übergeordnetes System eingebaut werden kann.

Die Auswerteelektronik kann vorteilhaft in dem Spannungswellengetriebe angeordnet sein. Bei einer solchen Ausführung ist die Auswerteelektronik besonders gut vor äußeren Einflüssen, insbesondere vor Verschmutzung und/oder Beschädigung, geschützt. Insbesondere kann die Auswerteelektronik in einem Gehäuse des Getriebemoduls angeordnet sein. Insbesondere kann die Auswerteelektronik an einem Gehäuse des Getriebemoduls befestigt sein. Das Gehäuse kann vorteilhaft wenigstens teilweise durch das Getriebemodul-Drehmomentabstützelement gebildet sein.

Es ist alternativ beispielsweise auch möglich, dass die Auswerteelektronik außen an dem Getriebemodul-Drehmomentabstützelement, insbesondere an einem Gehäuse des Getriebemoduls, angeordnet ist. Beispielsweise kann die Auswerteelektronik außen an einem Gehäuse des Getriebemoduls angeordnet sein, das wenigstens teilweise durch das Getriebemodul-Drehmomentabstützelement gebildet ist.

Das Getriebemodul-Drehmomentabstützelement kann vorteilhaft als Gehäuse oder als Teil eines Gehäuses ausgebildet sein. Das Gehäuse kann vorteilhaft das Spannungswellengetriebe und/oder den Messaufnehmer und/oder die Auswerteelektronik einhausen. Bei einer solchen Ausführung sind die genannten Elemente besonders gut vor äußeren Einflüssen, insbesondere vor Verschmutzung und/oder Beschädigung geschützt.

Hinsichtlich der Ausgestaltung des wenigstens einen Messaufnehmers gibt es, insbesondere im Hinblick auf die Art der zu erfassenden Eingangsgröße, keine grundsätzlichen Beschränkungen.

Beispielsweise kann der Messaufnehmer dazu ausgebildet sein, eine Eingangsgröße zu erfassen, die von einer Temperatur, insbesondere einer Temperatur der Spannungswellengetriebe-Antriebswelle oder einer Temperatur der Spannungswellengetriebe-Abtriebswelle oder einer Temperatur des Circularsplines oder einer Temperatur des Flexsplines oder einer Temperatur des Wellengenerators, abhängig ist. Insoweit kann der Messaufnehmer vorteilhaft als Temperatursensor ausgebildet sein. Die Ausgangsgröße kann eine Temperatur, beispielsweise in Grad Celsius, sein. Der Temperatursensor kann vorteilhaft innerhalb des Spannungswellengetriebes an oder in der unmittelbaren Nähe eines Bauteils angeordnet sein, dessen Temperatur von dem Betriebs- und/oder Verschleißzustand des Spannungswellengetriebes abhängig ist. Beispielsweise kann der Temperatursensor vorteilhaft an dem Circularspline angeordnet sein.

Beispielsweise kann der Messaufnehmer dazu ausgebildet sein, eine Eingangsgröße zu erfassen, die von einem Drehmoment, insbesondere einem auf die Spannungswellengetriebe-Antriebswelle oder die Spannungswellengetriebe-Abtriebswelle oder den Circularspline oder den Flexspline oder den Wellengenerator wirkenden Drehmoment, abhängig ist. Insoweit kann der Messaufnehmer vorteilhaft als Drehmomentsensor ausgebildet sein. Die Ausgangsgröße kann ein Drehmoment, beispielsweise gemessen in Newtonmeter, sein. Insbesondere kann der Messaufnehmer vorteilhaft als dynamischer Drehmomentsensor ausgebildet sein. Beispielsweise kann der Drehmomentsensor dazu ausgebildet und angeordnet sein, ein auf den Flexspline wirkendes Drehmoment oder ein auf den Circularspline wirkendes Drehmoment zu erfassen.

Ganz allgemein kann der Messaufnehmer dazu ausgebildet sein, eine Eingangsgröße zu erfassen, die von einer Beschleunigung, insbesondere einer Beschleunigung der Spannungswellengetriebe-Antriebswelle oder einer Beschleunigung der Spannungswellengetriebe-Abtriebswelle oder einer Beschleunigung des Circularsplines oder einer Beschleunigung des Flexsplines oder einer Beschleunigung des Wellengenerators, abhängig ist.

Insbesondere kann der Messaufnehmer dazu ausgebildet sein, eine Eingangsgröße zu erfassen, die von einer Vibration, insbesondere einer Vibration der Spannungswellengetriebe-Antriebswelle oder einer Vibration der Spannungswellengetriebe-Abtriebswelle oder einer Vibration des Circularsplines oder einer Vibration des Flexsplines oder einer Vibration des Wellengenerators, abhängig ist. Insoweit kann der Messaufnehmer vorteilhaft als Beschleunigungssensor ausgebildet sein. Insbesondere kann der Messaufnehmer als piezoelektrischer Beschleunigungssensor ausgebildet sein. Die Ausgangsgröße kann eine Schwingungsamplitude (beispielsweise gemessen in Mikrometer) und/oder eine Schwingungsfrequenz (beispielsweise gemessen in Schwingungen pro Sekunde) der Vibration beinhalten.

Beispielsweise kann der Messaufnehmer dazu ausgebildet sein, eine Eingangsgröße zu erfassen, die von einem Drehwinkel (bezogen auf eine Drehung um die Rotationsachse), insbesondere einem Drehwinkel der Spannungswellengetriebe-Antriebswelle oder einem Drehwinkel der Spannungswellengetriebe-Abtriebswelle oder einem Drehwinkel des Circularsplines oder einem Drehwinkel des Flexsplines oder einem Drehwinkel des Wellengenerators, abhängig ist. Die Ausgangsgröße kann ein Drehwinkel, beispielsweise gemessen in Grad, sein.

Beispielsweise kann der Messaufnehmer dazu ausgebildet sein, eine Eingangsgröße zu erfassen, die von einer Drehzahl, insbesondere einer Drehzahl der Spannungswellengetriebe-Antriebswelle oder einer Drehzahl der Spannungswellengetriebe-Abtriebswelle oder einer Drehzahl des Circularsplines oder einer Drehzahl des Flexsplines oder einer Drehzahl des Wellengenerators, abhängig ist. Beispielsweise kann der Messaufnehmer als Drehzahlsensor ausgebildet sein, der nach dem Hall-Prinzip arbeitet. Die Ausgangsgröße kann eine Drehzahl, beispielsweise gemessen in Umdrehungen pro Minute, sein.

Bei einer ganz besonders vorteilhaften Ausführung ist die Auswerteelektronik dazu ausgebildet, die die elektrischen Messsignale des wenigstens einen Messaufnehmers in Abhängigkeit von der Zeit zu erfassen. Zusätzlich kann vorteilhaft vorgesehen sein, dass der zeitliche Verlauf der Ausgangsgröße ermittelt wird. Eine solche Ausführung hat den ganz besonderen Vorteil, dass aus dem zeitlichen Verlauf der Eingangsgröße (vorzugsweise mehrerer unterschiedlicher Eingangsgrößen mehrerer unterschiedlicher Messaufnehmer) und/oder dem zeitlichen Verlauf der Ausgangsgröße (vorzugsweise mehrerer unterschiedlicher Ausgangsgrößen) eine Prognose über sein künftiges Verhalten und/oder über eine künftige Eigenschaft des Getriebemoduls ermittelt werden kann.

Insbesondere können mehrere Messaufnehmer vorhanden sein, von denen jeder dazu ausgebildet und angeordnet ist, eine jeweils getriebespezifische Eingangsgröße zu erfassen und jeweils ein elektrisches Messsignal zu erzeugen. Insbesondere kann vorteilhaft vorgesehen sein, dass die mehreren Messaufnehmer gleichzeitig mehrere unterschiedlichartige Eingangsgrößen (beispielsweise eine Drehzahl, ein Drehmoment und eine Temperatur) erfassen und jeweils ein entsprechendes elektrisches Messsignal an die Auswerteelektronik übergeben. Unterschiedlichartige Eingangsgrößen sind insbesondere solche Eingangsgrößen, die eine unterschiedliche Maßeinheit aufweisen. Die mehreren Messaufnehmer können innerhalb des Getriebemodul räumlich verteilt an unterschiedlichen Getriebebauteilen angeordnet sein.

Bei einer ganz besonders vorteilhaften Ausführung ist die Auswerteelektronik dazu ausgebildet und eingerichtet, die elektrischen Messsignale der mehreren Messaufnehmer zu empfangen und gemeinsam bei der Erzeugung der Ausgangsgröße (oder mehrerer Ausgangsgrößen) zu berücksichtigen.

Bei einer vorteilhaften Ausführung ist die Auswerteelektronik dazu ausgebildet, die wenigstens eine Ausgangsgröße drahtlos auszugeben. Beispielsweise kann vorteilhaft vorgesehen sein, dass die Auswerteelektronik die wenigstens eine Ausgangsgröße über einen Datenübertragungsstandard, insbesondere an eine Steuerungselektronik eines übergeordneten Systems oder an ein Empfangsgerät eines Benutzers, ausgibt. Insbesondere kann vorteilhaft vorgesehen sein, dass die Auswerteelektronik die wenigstens eine Ausgangsgröße per Bluetooth, insbesondere an eine Steuerungselektronik eines übergeordneten Systems oder an ein Empfangsgerät eines Benutzers, ausgibt.

Bei einer anderen Ausführung weist die Auswerteelektronik einen Steckverbinder auf und ist dazu ausgebildet, die wenigstens eine Ausgangsgröße über den Steckverbinder, insbesondere an eine Steuerungselektronik eines übergeordneten Systems oder an ein Empfangsgerät eines Benutzers, auszugeben.

Bei einer ganz besonders vorteilhaften Ausführung beinhaltet die Auswerteelektronik einen Datenspeicher. Insbesondere kann hierbei vorteilhaft vorgesehen sein, dass die erzeugten Ausgangsgrößen gespeichert werden. Eine solche Ausführung ermöglicht es beispielsweise, den zeitlichen Belastungsverlauf des Getriebemoduls nachvollziehen zu können, beispielsweise um nachträglich die Ursache einer Beschädigung oder eines Ausfalls des Getriebemoduls erforschen zu können.

Bei einer ganz besonders robusten Ausführung ist das Abtriebswellen-Wälzlager als Kreuzrollenlager oder als zweireihiges Kegelrollenlager ausgebildet. Alternativ oder zusätzlich kann vorteilhaft vorgesehen sein, dass das Antriebswellen-Wälzlager als Kreuzrollenlager oder als zweireihiges Kegelrollenlager ausgebildet ist. Diese Ausführungen sind besonders vorteilhaft bei Anwendungen einsetzbar, bei denen große äußere Kräfte senkrecht zu der Abtriebswelle auf das Getriebemodul einwirken.

Bei einer besonderen Ausführung ist das Kreuzrollenlager bzw. das zweireihige Kegelrollenlager axial zwischen der Verzahnung des Flexsplines und dem Boden (bei Topfbauweise) bzw. dem Kragen (bei Hutbauweise) des Flexsplines angeordnet. Hierbei kann wenigstens ein Messaufnehmer axial zwischen dem Kreuzrollenlager bzw. dem zweireihigen Kegelrollenlager und der Verzahnung des Flexsplines angeordnet sein. Alternativ oder zusätzlich kann wenigstens ein Messaufnehmer axial zwischen dem Kreuzrollenlager bzw. dem zweireihigen Kegelrollenlager und dem Boden (bei Topfbauweise) bzw. dem Kragen (bei Hutbauweise) des Flexsplines angeordnet sein. Hierbei kann außerdem die Auswerteelektronik axial zwischen dem Kreuzrollenlager bzw. dem zweireihigen Kegelrollenlager und der Verzahnung des Flexsplines angeordnet sein oder axial zwischen dem Kreuzrollenlager bzw. dem zweireihigen Kegelrollenlager und dem Boden (bei Topfbauweise) bzw. dem Kragen (bei Hutbauweise) des Flexsplines angeordnet sein. Diese Ausführungen sind besonders kompakt und gleichzeitig besonders robust. Ganz allgemein kann vorteilhaft gelten a > (b+c), wobei a die axiale Länge des Flexsplines ist, b die axiale Länge des Kreuzrollenlagers bzw. des zweireihigen Kegelrollenlagers und c die axiale Länge des Circularsplines.

Die Spannungswellengetriebe-Antriebswelle kann vorteilhaft als Hohlwelle ausgebildet sein. Eine solche Ausführung hat den ganz besonderen Vorteil, dass elektrische Zuleitungen durch die Spannungswellengetriebe-Antriebswelle verlaufen können.

Ganz besonders vielseitig einsetzbar ist eine Ausführung, bei der die axiale Länge des Getriebemoduls kleiner ist als der radiale Durchmesser des Getriebemoduls. Eine solche Ausführung eignet sich beispielsweise besonders gut für den Einbau in einen Roboterarm eines Roboters, insbesondere Industrieroboters.

Bei einer ganz besonders vorteilhaften Ausführung kann das gesamte Getriebemodul als fertig montierte und funktionsfähige Baueinheit an ein anzutreibendes System ankoppelt werden, ohne hierfür Teile des Getriebemoduls demontieren zu müssen. Alternativ oder zusätzlich kann das Getriebemodul vorteilhaft derart ausgebildet sein, dass es an eine drehmomenteinspeisende Antriebsvorrichtung ankoppelt werden kann, ohne hierfür Teile des Getriebemoduls demontieren zu müssen. Insbesondere kann vorteilhaft vorgesehen sein, dass das gesamte Getriebemodul und/oder ein gesamter Aktuator, der ein solches Getriebemodul aufweist, als fertig montierte und funktionsfähige Baueinheit an ein mittels des Aktuators anzutreibendes System, das eine Antriebswelle aufweist, ankoppelbar ist, wobei eine drehstarre Verbindung des Spannungswellengetriebe-Abtriebselements mit der Antriebswelle des anzutreibenden Systems herstellbar ist, ohne hierfür Teile des Getriebemodul bzw. des Aktuators demontieren zu müssen, insbesondere ohne hierfür im Kraftfluss vom Antriebsmotor zum Spannungswellengetriebe-Abtriebselement liegende Teile demontieren zu müssen. Eine solche drehstarre, insbesondere koaxiale, Verbindung des Spannungswellengetriebe-Abtriebselements mit der Antriebswelle des anzutreibenden Systems ist beispielsweise mittels einer Steckverzahnung oder mittels einer zentralen Befestigungsschraube, die durch das Getriebemodul (und/oder den Antriebsmotor) hindurch verläuft und das Spannungswellengetriebe-Abtriebselement mit der Antriebswelle des anzutreibenden Systems verbindet, herstellbar.

Das erfindungsgemäße Getriebemodul und der erfindungsgemäße Aktuator haben den ganz besonderen Vorteil, dass sie als eigenständige, vom Hersteller fertig zusammengebaute und hinsichtlich einer ordnungsgemäßen Funktionsfähigkeit getestete Baueinheit vom Verwender mit einem anzutreibenden System gekoppelt werden können. Insbesondere ist es vorteilhaft nicht notwendig, das Getriebemodul bzw. den Aktuator für das Ankoppeln an ein anzutreibendes System zu zerlegen, was zum einen den Montagevorgang an sich vereinfacht und darüber hinaus gewährleistet, dass das Getriebemodul bzw. der Aktuator in dem Zustand zum Einsatz kommt, in dem er hinsichtlich seiner Funktionsfähigkeit, insbesondere unmittelbar nach seiner Herstellung, getestet wurde.

Bei einer ganz besonders vorteilhaften Ausführung ist eine Sperrvorrichtung vorhanden, die wahlweise in einer Freigabestellung, in der die Spannungswellengetriebe-Abtriebswelle relativ zu dem Getriebemodul-Drehmomentabstützelement rotierbar ist, oder eine Blockierstellung, in der die Sperrvorrichtung eine Rotation der Spannungswellengetriebe-Abtriebswelle relativ zu dem Getriebemodul-Drehmomentabstützelement blockiert, schaltbar ist. Die Sperrvorrichtung kann beispielsweise einen, insbesondere in Radialrichtung linear verschiebbaren, Sperrstift aufweisen, dessen freies Ende in der Blockierstellung in eine Ausnehmung der Spannungswellengetriebe-Antriebswelle oder in eine Ausnehmung der Spannungswellengetriebe-Abtriebswelle eingreift. Insbesondere kann vorteilhaft vorgesehen sein, dass die Auswerteelektronik die Sperrvorrichtung automatisch in die Blockierstellung schaltet, wenn ein vorgegebener Grenzwert der Ausgangsgröße überschritten oder unterschritten wird, beispielsweise um das Getriebemodul vor einer Überbelastung und/oder einem drohenden Versagen zu schützen.

Das Getriebemodul kann vorteilhaft ein Mittel zum Verändern der Vorspannung des Spannungswellengetriebes aufweisen. Hierzu kann der Wellengenerator relativ zu dem Flexspline stufenlos oder in Stufen axial verstellbar angeordnet sein. Insbesondere kann vorteilhaft vorgesehen sein, dass die Auswerteelektronik die Vorspannung des Spannungswellengetriebes automatisch verändert, wenn ein vorgegebener Grenzwert der Ausgangsgröße überschritten oder unterschritten wird, beispielsweise um das Getriebemodul vor eine Überbelastung und/oder einem drohenden Versagen zu schützen. Insbesondere kann vorteilhaft vorgesehen sein, dass die Auswerteelektronik die Vorspannung des Spannungswellengetriebes automatisch erhöht, wenn die Drehmomentbelastung des Getriebemoduls zunimmt, um ein Überratschen der miteinander in Eingriff stehenden Verzahnungen von Flexspline und Circularspline und/oder von Flexspline und Dynamicspline zu verhindern.

Alternativ oder zusätzlich kann vorteilhaft vorgesehen sein, dass die Auswerteelektronik die Vorspannung des Spannungswellengetriebes verändert, nachdem sie von einer Steuerungselektronik einer Maschine, die das Getriebemodul beinhaltet, oder von einer externen Steuerungselektronik eine entsprechende Anweisung, insbesondere in Form von Daten und/oder elektrischen Signalen, erhalten hat.

Ganz besonders vorteilhaft ist ein Aktuator, der ein erfindungsgemäßes Getriebemodul sowie eine drehmomenteinspeisende Antriebsvorrichtung aufweist, die an das Getriebemodul derart angekoppelt ist, dass das Getriebemodul-Drehmomentabstützelement drehfest mit dem Antriebsvorrichtungs-Drehmomentabstützelement verbunden ist und die Spannungswellengetriebe-Antriebswelle drehfest mit der Abtriebswelle der drehmomenteinspeisenden Antriebsvorrichtung verbunden ist. Die drehmomenteinspeisende Antriebsvorrichtung kann vorteilhaft insbesondere ein elektrischer Antriebsmotor sein.

Ganz besonders vorteilhaft ist außerdem eine Maschine, die einen erfindungsgemäßen Aktuator sowie ein anzutreibendes System aufweist, die an das Getriebemodul derart angekoppelt ist, dass das Getriebemodul-Drehmomentabstützelement drehfest mit dem System-Drehmomentabstützelement verbunden ist und die Spannungswellengetriebe-Abtriebswelle drehfest mit der Antriebswelle des anzutreibenden Systems verbunden ist.

Wie bereits erwähnt kann die Maschine eine Steuerungselektronik aufweist, die an die Auswerteelektronik angeschlossen und dazu ausgebildet und eingerichtet ist, die Ausgangsgröße bzw. die Ausgangsgrößen von der Auswerteelektronik zu empfangen.

Insbesondere kann die Steuerungselektronik dazu ausgebildet und eingerichtet sein, das Getriebemodul und/oder die drehmomenteinspeisende Antriebsvorrichtung in Abhängigkeit von der empfangenen Ausgangsgröße bzw. den empfangenen Ausgangsgrößen zu steuern oder zu regeln.

Bei einer besonders vorteilhaften Ausführung reduziert die Auswerteelektronik die Ausgangsleistung der angekoppelten drehmomenteinspeisenden Antriebsvorrichtung automatisch, wenn ein vorgegebener Grenzwert der Ausgangsgröße überschritten oder unterschritten wird, beispielsweise um das Getriebemodul vor einer Überbelastung und/oder einem drohenden Versagen zu schützen. Es kann alternativ auch vorgesehen sein, dass die Steuerungselektronik des anzutreibenden Systems die Ausgangsleistung der angekoppelten drehmomenteinspeisenden Antriebsvorrichtung automatisch reduziert, wenn ein vorgegebener Grenzwert der Ausgangsgröße überschritten oder unterschritten wird.

Die Auswerteelektronik und/oder die Steuerungselektronik können auch derart ausgebildet sein, dass sie die drehmomenteinspeisende Antriebsvorrichtung automatisch abschalten, wenn ein vorgegebener Grenzwert der Ausgangsgröße überschritten oder unterschritten wird.

Alternativ oder zusätzlich kann vorteilhaft vorgesehen sein, dass die Steuerungselektronik automatisch die Sperrvorrichtung in die Blockierstellung schaltet, wenn ein vorgegebener Grenzwert der Ausgangsgröße überschritten oder unterschritten wird.

Bei einer besonderen Ausführung veranlasst die Steuerungselektronik eine Veränderung der Vorspannung des Spannungswellengetriebes.

Bei einer ganz besonders vorteilhaften Ausführung ist die Steuerungselektronik dazu ausgebildet und eingerichtet, eine Information, insbesondere optisch und/oder akustisch, an einen Benutzer auszugeben. Beispielsweise kann vorteilhaft vorgesehen sein, dass die Steuerungselektronik eine Warnmeldung über ein Display an einen Benutzer ausgibt, beispielsweise wenn das Getriebemodul 90% der Lebensdauer erreicht hat oder wenn eine Temperatur zu hoch ist. Es ist, alternativ oder zusätzlich, auch möglich, dass die Steuerungselektronik eine Handlungsempfehlung an den Benutzer ausgibt, beispielsweis die Handlungsempfehlung, die Belastung der Getriebeeinheit zu verringern. Die Information kann beispielsweise die Handlungsempfehlung beinhalten, eine Drehzahl zu verringern und/oder die Vorspannung des Spannungswellengetriebes zu verändern. Die Information kann auch eine Prognose über ein künftiges Verhalten oder eine künftige Eigenschaft des Getriebemoduls beinhalten.

Bei einer besonders vorteilhaften Ausführung der Maschine sind die Spannungswellengetriebe-Antriebswelle und die Abtriebswelle der drehmomenteinspeisenden Antriebsvorrichtung mittels einer Steckverbindung oder einer Klemmverbindung oder einem Klemmring oder einer Flanschverbindung oder mittels einer Befestigungsschraube, deren Kopf durch einen nach außen mündenden Befestigungskanal erreichbar ist, miteinander drehfest verbunden.

Die Maschine kann vorteilhaft als ein programmierbarer Bewegungsautomat, insbesondere als Industrieroboter, ausgebildet sein.

Die Maschine kann außerdem vorteilhaft als ein Fahrzeug, insbesondere als Personenkraftwagen oder als Lastkraftwagen, ausgebildet sein.

Die Maschine kann außerdem vorteilhaft als Teil eines Fahrzeuges, insbesondere als aktives Fahrwerk oder als aktive Lenkung, ausgebildet sein.

Besonders vorteilhaft ist ein Getriebemodul, das wenigstens auf einen der nachfolgend genannten Aspekte aufweist:
1. Getriebemodul (1), das dazu ausgebildet ist, einerseits an eine drehmomenteinspeisende Antriebsvorrichtung (2) und andererseits an ein anzutreibendes System (3) angekoppelt zu werden, wobei das Getriebemodul (1) aufweist:
   a. ein Getriebemodul-Drehmomentabstützelement (4) zur direkten oder indirekten drehmomentabstützenden Verbindung mit einem Antriebsvorrichtungs-Drehmomentabstützelement (5) der drehmomenteinspeisenden Antriebsvorrichtung (2) und/oder mit einem System-Drehmomentabstützelement (6) des anzutreibenden Systems (3) und
   b. ein Spannungswellengetriebe (7) mit einer Spannungswellengetriebe-Antriebswelle (8) und einer Spannungswellengetriebe-Abtriebswelle (9), wobei
      i. die Spannungswellengetriebe-Antriebswelle (8) dazu ausgebildet und bestimmt ist, mit einer Abtriebswelle (10) der drehmomenteinspeisenden Antriebsvorrichtung (2) drehfest verbunden zu werden, und wobei die Spannungswellengetriebe-Abtriebswelle (9) dazu ausgebildet und bestimmt ist, mit einer Antriebswelle (11) des anzutreibenden Systems (3) drehfest verbunden zu werden, und wobei
      ii. die Spannungswellengetriebe-Abtriebswelle (9) mittels wenigstens eines Abtriebswellen-Wälzlagers (12) direkt oder indirekt relativ zu dem Getriebemodul-Drehmomentabstützelement (4) und/oder direkt oder indirekt relativ zu der Spannungswellengetriebe-Antriebswelle (8) rotierbar gelagert ist,
   c. wenigstens einen Messaufnehmer (13), der dazu ausgebildet und angeordnet ist, eine getriebespezifische Eingangsgröße zu erfassen und ein elektrisches Messsignal zu erzeugen, und
   d. eine Auswerteelektronik, die elektrisch an den Messaufnehmer (13) angeschlossen ist und die dazu ausgebildet, aus dem elektrischen Messsignal wenigstens eine Ausgangsgröße zu erzeugen.
2. Getriebemodul (1) nach Aspekt 1, dadurch gekennzeichnet, dass das Spannungswellengetriebe (7) einen Wellengenerator (24) mit einem Antriebskern (25) aufweist und dass die Spannungswellengetriebe-Antriebswelle (8) durch den Antriebskern (25) gebildet ist oder drehfest mit dem Antriebskern (25) verbunden ist.
3. Getriebemodul (1) nach Aspekt 1 oder 2, dadurch gekennzeichnet, dass das Spannungswellengetriebe (7) einen Flexspline (22) aufweist und dass die Spannungswellengetriebe-Abtriebswelle (9) durch den Flexspline (22) gebildet ist oder drehfest mit dem Flexspline (22) verbunden ist.
4. Getriebemodul (1) nach Aspekt 3, dadurch gekennzeichnet, dass der Flexspline (22) hutförmig oder topfförmig ausgebildet ist.
5. Getriebemodul (1) nach einem der Aspekte 1 bis 4, dadurch gekennzeichnet, dass das Spannungswellengetriebe (7) einen Circularspline (23) aufweist, der drehfest mit dem Getriebemodul-Drehmomentabstützelement (4) verbunden ist oder der gemeinsam mit dem Getriebemodul-Drehmomentabstützelement (4) einstückig aus einem einzigen Stück Rohmaterial hergestellt ist.
6. Getriebemodul (1) nach Aspekt 1 oder 2, dadurch gekennzeichnet, dass das Spannungswellengetriebe (7) einen Circularspline (23) und einen Dynamicspline (27) aufweist.
7. Getriebemodul (1) nach Aspekt 6, dadurch gekennzeichnet, dass die Spannungswellengetriebe-Abtriebswelle (9) durch den Dynamicspline (27) gebildet ist oder drehfest mit dem Dynamicspline (27) verbunden ist, insbesondere während der Circularspline (23) drehfest mit dem Getriebemodul-Drehmomentabstützelement (4) verbunden ist oder der Circularspline (23) gemeinsam mit dem Getriebemodul-Drehmomentabstützelement (4) einstückig aus einem einzigen Stück Rohmaterial hergestellt ist.
8. Getriebemodul (1) nach Aspekt 6, dadurch gekennzeichnet, dass die Spannungswellengetriebe-Abtriebswelle (9) durch den Circularspline (23) gebildet ist oder drehfest mit dem Circularspline (23) verbunden ist, insbesondere während der Dynamicspline (27) drehfest mit dem Getriebemodul-Drehmomentabstützelement (4) verbunden ist oder der Dynamicspline (27) gemeinsam mit dem Getriebemodul-Drehmomentabstützelement (4) einstückig aus einem einzigen Stück Rohmaterial hergestellt ist.
9. Getriebemodul (1) nach einem der Aspekte 1 bis 8, dadurch gekennzeichnet, dass
   a. das Getriebemodul-Drehmomentabstützelement (4) ein erstes Befestigungselement (19) zur Befestigung des Getriebemodul-Drehmomentabstützelements (4) an dem Antriebsvorrichtungs-Drehmomentabstützelement (5) aufweist, und/oder dass
   b. das Getriebemodul-Drehmomentabstützelement (4) ein zweites Befestigungselement (20) zur Befestigung des Getriebemodul-Drehmomentabstützelements (4) an dem System-Drehmomentabstützelement (6) aufweist.
10. Getriebemodul (1) nach einem der Aspekte 1 bis 9, dadurch gekennzeichnet, dass die Spannungswellengetriebe-Antriebswelle (8) mittels wenigstens eines Antriebswellen-Wälzlagers (18) direkt oder indirekt relativ zu dem Getriebemodul-Drehmomentabstützelement (4) rotierbar gelagert ist.
11. Getriebemodul (1) nach einem der Aspekte 1 bis 10, dadurch gekennzeichnet, dass die Auswerteelektronik (17) in dem Spannungswellengetriebe (7) angeordnet ist und/oder dass die Auswerteelektronik (17) an dem Getriebemodul-Drehmomentabstützelement (4) befestigt ist.
12. Getriebemodul (1) nach einem der Aspekte 1 bis 11, dadurch gekennzeichnet, dass das Getriebemodul-Drehmomentabstützelement (4) wenigstens teilweise als Gehäuse oder als Teil eines Gehäuses ausgebildet ist.
13. Getriebemodul (1) nach Aspekt 12, dadurch gekennzeichnet, dass das Gehäuse das Spannungswellengetriebe (7) und/oder den Messaufnehmer (13) und/ und/oder die Auswerteelektronik (17) einhaust.
14. Getriebemodul (1) nach einem der Aspekte 1 bis 13, dadurch gekennzeichnet, dass die Eingangsgröße von einer Temperatur, insbesondere einer Temperatur der Spannungswellengetriebe-Antriebswelle (8) oder einer Temperatur der Spannungswellengetriebe-Abtriebswelle (9) oder einer Temperatur des Circularsplines oder einer Temperatur des Flexsplines (22) oder einer Temperatur des Wellengenerators, abhängig ist.
15. Getriebemodul (1) nach einem der Aspekte 1 bis 13, dadurch gekennzeichnet, dass die Eingangsgröße von einem Drehmoment, insbesondere einem auf die Spannungswellengetriebe-Antriebswelle (8) oder die Spannungswellengetriebe-Abtriebswelle (9) oder den Circularspline (23) oder den Flexspline (22) oder den Wellengenerator wirkenden Drehmoment, abhängig ist.
16. Getriebemodul (1) nach einem der Aspekte 1 bis 13, dadurch gekennzeichnet, dass die Eingangsgröße von einer Vibration, insbesondere einer Vibration der Spannungswellengetriebe-Antriebswelle (8) oder einer Vibration der Spannungswellengetriebe-Abtriebswelle (9) oder einer Vibration des Circularsplines (23) oder einer Vibration des Flexsplines (22) oder einer Vibration des Wellengenerators (24), abhängig ist.
17. Getriebemodul (1) nach einem der Aspekte 1 bis 13, dadurch gekennzeichnet, dass die Eingangsgröße von einer Beschleunigung, insbesondere einer Beschleunigung der Spannungswellengetriebe-Antriebswelle (8) oder einer Beschleunigung der Spannungswellengetriebe-Abtriebswelle (9) oder einer Beschleunigung des Circularsplines (23) oder einer Beschleunigung des Flexsplines (22) oder einer Beschleunigung des Wellengenerators (24), abhängig ist.
18. Getriebemodul (1) nach einem der Aspekte 1 bis 13, dadurch gekennzeichnet, dass die Eingangsgröße von einem Winkel, insbesondere einem Winkel der Spannungswellengetriebe-Antriebswelle (8) oder einem Winkel der Spannungswellengetriebe-Abtriebswelle (9) oder einem Winkel des Circularsplines (23) oder einem Winkel des Flexsplines (22) oder einem Winkel des Wellengenerators (24), abhängig ist.
19. Getriebemodul (1) nach einem der Aspekte 1 bis 13, dadurch gekennzeichnet, dass die Eingangsgröße von einer Drehzahl, insbesondere einer Drehzahl der Spannungswellengetriebe-Antriebswelle (8) oder einer Drehzahl der Spannungswellengetriebe-Abtriebswelle (9) oder einer Drehzahl des Circularsplines (23) oder einer Drehzahl des Flexsplines (22) oder einer Drehzahl des Wellengenerators (24), abhängig ist
20. Getriebemodul (1) nach einem der Aspekte 1 bis 19, dadurch gekennzeichnet, dass die Auswerteelektronik (17) die elektrischen Messsignale des wenigstens einen Messaufnehmers in Abhängigkeit von der Zeit erfasst.
21. Getriebemodul (1) nach einem der Aspekte 1 bis 20, dadurch gekennzeichnet, dass mehrere Messaufnehmer (13) vorhanden sind, von denen jeder dazu ausgebildet und angeordnet ist, eine getriebespezifische Eingangsgröße zu erfassen und ein elektrisches Messsignal zu erzeugen.
22. Getriebemodul (1) nach Aspekt 21, dadurch gekennzeichnet, dass die mehreren Messaufnehmer (13) unterschiedlichartige Eingangsgrößen erzeugen.
23. Getriebemodul (1) nach Aspekt 21 oder 22, dadurch gekennzeichnet, dass die mehreren Messaufnehmer (13) an unterschiedlichen Getriebebauteilen angeordnet sind.
24. Getriebemodul (1) nach einem der Aspekte 21 bis 23, dadurch gekennzeichnet, dass die Auswerteelektronik (17) die elektrischen Messsignale der mehreren Messaufnehmer (13) empfängt und gemeinsam bei der Erzeugung des Ausgangssignales berücksichtigt.
25. Getriebemodul (1) nach einem der Aspekte 1 bis 24, dadurch gekennzeichnet, dass die Auswerteelektronik (17) mehrere unterschiedliche Ausgangsgrößen erzeugt.
26. Getriebemodul (1) nach einem der Aspekte 1 bis 25, dadurch gekennzeichnet, dass die Auswerteelektronik (17) dazu ausgebildet ist, die wenigstens eine Ausgangsgröße drahtlos auszugeben.
27. Getriebemodul (1) nach einem der Aspekte 1 bis 26, dadurch gekennzeichnet, dass die Auswerteelektronik (17) einen Steckverbinder aufweist und dazu ausgebildet ist, die wenigstens eine Ausgangsgröße über den Steckverbinder auszugeben.
28. Getriebemodul (1) nach einem der Aspekte 1 bis 27, dadurch gekennzeichnet, dass die Auswerteelektronik (17) einen Datenspeicher beinhaltet.
29. Getriebemodul (1) nach Aspekt 28, dadurch gekennzeichnet, dass die Auswerteelektronik (17) die Ausgangsgrößen in dem Datenspeicher ablegt.
30. Getriebemodul (1) nach einem der Aspekte 1 bis 29, dadurch gekennzeichnet, dass das Abtriebswellen-Wälzlager als Kreuzrollenlager oder als zweireihiges Kegelrollenlager ausgebildet ist.
31. Getriebemodul (1) nach einem der Aspekte 1 bis 30, dadurch gekennzeichnet, dass das Antriebswellen-Wälzlager als Kreuzrollenlager oder als zweireihiges Kegelrollenlager ausgebildet ist.
32. Getriebemodul (1) nach einem der Aspekte 1 bis 31, dadurch gekennzeichnet, dass die Spannungswellengetriebe-Antriebswelle (8) als Hohlwelle ausgebildet ist.
33. Getriebemodul (1) nach einem der Aspekte 1 bis 32, dadurch gekennzeichnet, dass die axiale Länge des Getriebemoduls (1) kleiner ist als der radiale Durchmesser des Getriebemoduls (1).
34. Getriebemodul (1) nach einem der Aspekte 1 bis 33, dadurch gekennzeichnet, dass das gesamte Getriebemodul (1) als fertig montierte und funktionsfähige Baueinheit an ein anzutreibendes System (3), ankoppelbar ist, ohne hierfür Teile des Getriebemoduls demontieren zu müssen.
35. Getriebemodul (1) nach einem der Aspekte 1 bis 34, dadurch gekennzeichnet, dass das gesamte Getriebemodul (1) an eine drehmomenteinspeisende Antriebsvorrichtung (2) ankoppelbar ist, ohne hierfür Teile des Getriebemoduls (1) demontieren zu müssen.
36. Getriebemodul (1) nach einem der Aspekte 1 bis 35, dadurch gekennzeichnet, dass eine Sperrvorrichtung vorhanden ist, die wahlweise in einer Freigabestellung, in der die Spannungswellengetriebe-Abtriebswelle (9) relativ zu dem Getriebemodul-Drehmomentabstützelement (4) rotierbar ist, oder eine Blockierstellung, in der die Sperrvorrichtung eine Rotation der Spannungswellengetriebe-Abtriebswelle (9) relativ zu dem Getriebemodul-Drehmomentabstützelement (4) blockiert, schaltbar ist.
37. Getriebemodul nach Aspekt 36, dadurch gekennzeichnet, dass die Auswerteelektronik (17) die Sperrvorrichtung automatisch in die Blockierstellung schaltet, wenn ein vorgegebener Grenzwert der Ausgangsgröße überschritten oder unterschritten wird.
38. Getriebemodul (1) nach einem der Aspekte 1 bis 37, dadurch gekennzeichnet, dass das Getriebemodul (1) ein Mittel zum Verändern der Vorspannung des Spannungswellengetriebes (7) aufweist.
39. Getriebemodul (1) nach Aspekt 38, dadurch gekennzeichnet, dass die Auswerteelektronik (17) automatisch die Vorspannung des Spannungswellengetriebes (7) verändert, wenn ein vorgegebener Grenzwert der Ausgangsgröße überschritten oder unterschritten wird.
40. Getriebemodul (1) nach Aspekt 38, dadurch gekennzeichnet, dass die Auswerteelektronik (17) dazu ausgebildet ist, Steuerungssignale zu empfangen und dass die Auswerteelektronik die Vorspannung des Spannungswellengetriebes (7) verändert, wenn sie ein entsprechendes Steuerungssignal empfängt.
41. Aktuator beinhaltend ein Getriebemodul (1) nach einem der Aspekte 1 bis 40 sowie eine drehmomenteinspeisende Antriebsvorrichtung (2), die an das Getriebemodul (1) derart angekoppelt ist, dass das Getriebemodul-Drehmomentabstützelement (4) drehfest mit dem Antriebsvorrichtungs-Drehmomentabstützelement (5) verbunden ist und die Spannungswellengetriebe-Antriebswelle (8) drehfest mit der Abtriebswelle der drehmomenteinspeisenden Antriebsvorrichtung (2) verbunden ist.
42. Aktuator nach Aspekt 41, dadurch gekennzeichnet, dass die drehmomenteinspeisende Antriebsvorrichtung (2) ein elektrischer Antriebsmotor ist.
43. Aktuator nach Aspekt 41 oder 42, dadurch gekennzeichnet, dass die Auswerteelektronik (17) die Ausgangsleistung der Antriebsvorrichtung (2) automatisch reduziert, wenn ein vorgegebener Grenzwert der Ausgangsgröße überschritten oder unterschritten wird.
44. Maschine beinhaltend einen Aktuator nach einem der Aspekte 41 bis 43 sowie ein anzutreibendes System (3), das an das Getriebemodul (1) derart angekoppelt ist, dass das Getriebemodul-Drehmomentabstützelement (4) drehfest mit dem System-Drehmomentabstützelement (6) verbunden ist und die Spannungswellengetriebe-Abtriebswelle (9) drehfest mit der Antriebswelle des anzutreibenden Systems (3) verbunden ist.
45. Maschine nach Aspekt 44, dadurch gekennzeichnet, dass die Maschine eine Steuerungselektronik (34) aufweist, die an die Auswerteelektronik (17) angeschlossen und dazu ausgebildet und eingerichtet ist, die Ausgangsgröße bzw. die Ausgangsgrößen von der Auswerteelektronik (17) zu empfangen.
46. Maschine nach Aspekt 45, dadurch gekennzeichnet, dass die Auswerteelektronik (17) dazu ausgebildet ist, Steuerungssignale zu von der Steuerungselektronik (34) zu empfangen.
47. Maschine nach Aspekt 45 oder 46, dadurch gekennzeichnet, dass die Steuerungselektronik (34) dazu ausgebildet und eingerichtet ist, das Getriebemodul (1) und/oder die drehmomenteinspeisende Antriebsvorrichtung (2) in Abhängigkeit von der empfangenen Ausgangsgröße bzw. den empfangenen Ausgangsgrößen zu steuern oder zu regeln.
48. Maschine nach einem der Aspekte 45 bis 47, dadurch gekennzeichnet, dass die Steuerungselektronik (34) die Ausgangsleistung der drehmomenteinspeisenden Antriebsvorrichtung (2) automatisch reduziert, wenn ein vorgegebener Grenzwert der Ausgangsgröße überschritten oder unterschritten wird.
49. Maschine nach einem der Aspekte 45 bis 47, dadurch gekennzeichnet, dass die Steuerungselektronik (34) die drehmomenteinspeisende Antriebsvorrichtung (2) automatisch abschaltet, wenn ein vorgegebener Grenzwert der Ausgangsgröße überschritten oder unterschritten wird.
50. Maschine nach einem der Aspekte 45 bis 49, dadurch gekennzeichnet, dass die Steuerungselektronik (34) automatisch die Vorspannung des Spannungswellengetriebes (7) verändert, wenn ein vorgegebener Grenzwert der Ausgangsgröße überschritten oder unterschritten wird.
51. Maschine nach einem der Aspekte 45 bis 50, dadurch gekennzeichnet, dass die Steuerungselektronik (34) automatisch die Sperrvorrichtung in die Blockierstellung schaltet, wenn ein vorgegebener Grenzwert der Ausgangsgröße überschritten oder unterschritten wird.
52. Maschine nach einem der Aspekte 45 bis 51, dadurch gekennzeichnet, dass die Steuerungselektronik (34) dazu ausgebildet und eingerichtet ist, eine Information, insbesondere optisch und/oder akustisch, an einen Benutzer auszugeben.
53. Maschine nach Aspekt 52, dadurch gekennzeichnet, dass die Information eine Handlungsempfehlung und/oder eine Prognose über ein künftiges Verhalten oder eine künftige Eigenschaft des Getriebemoduls beinhaltet.
54. Maschine nach einem der Aspekte 44 bis 53, dadurch gekennzeichnet, dass die Spannungswellengetriebe-Antriebswelle (8) und die Abtriebswelle der drehmomenteinspeisenden Antriebsvorrichtung (2) mittels einer Steckverbindung oder einer Klemmverbindung oder einem Klemmring oder einer Flanschverbindung oder mittels einer Befestigungsschraube (21), deren Kopf durch einen nach außen mündenden Befestigungskanal erreichbar ist, miteinander drehfest verbunden sind.
55. Maschine nach einem der Aspekte 44 bis 54, dadurch gekennzeichnet, dass die Maschine als ein programmierbarer Bewegungsautomat, insbesondere als Industrieroboter, ausgebildet ist.
56. Maschine nach einem der Aspekte 44 bis 54, dadurch gekennzeichnet, dass die Maschine als Fahrzeug, insbesondere als Personenkraftwagen oder als Lastkraftwagen, ausgebildet ist.
57. Maschine nach einem der Aspekte 44 bis 54, dadurch gekennzeichnet, dass die Maschine als Teil eines Fahrzeuges, insbesondere als Aktives Fahrwerk oder als aktive Lenkung, ausgebildet ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Getriebemoduls in einer schematischen Querschnittsdarstellung,
- Fig. 2: ein zweites Ausführungsbeispiel eines erfindungsgemäßen Getriebemoduls in einer schematischen Querschnittsdarstellung,
- Fig. 3: ein drittes Ausführungsbeispiel eines erfindungsgemäßen Getriebemoduls in einer schematischen Querschnittsdarstellung,
- Fig. 4: ein Ausführungsbeispiel eines erfindungsgemäßen Aktuators,
- Fig. 5: ein Ausführungsbeispiel eines Details einer erfindungsgemäßen Maschine, und
- Fig. 6: ein viertes Ausführungsbeispiel eines erfindungsgemäßen Getriebemoduls in einer schematischen Querschnittsdarstellung.

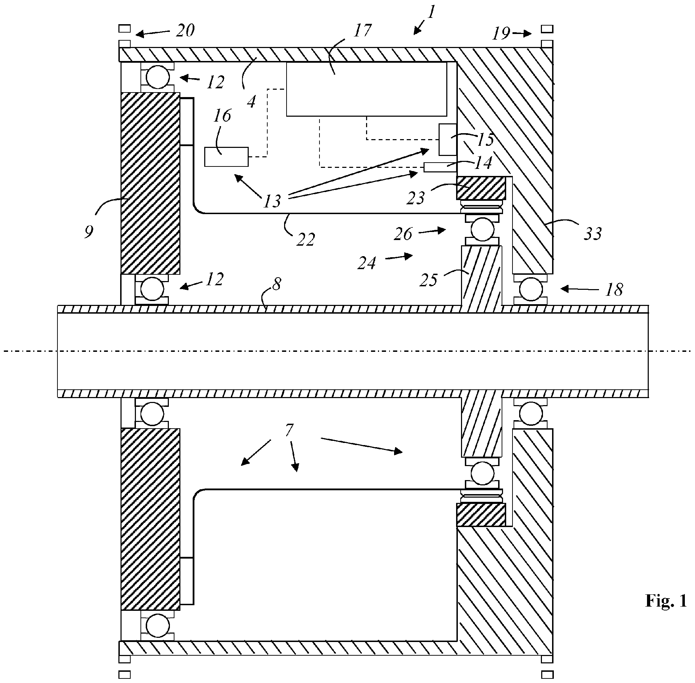

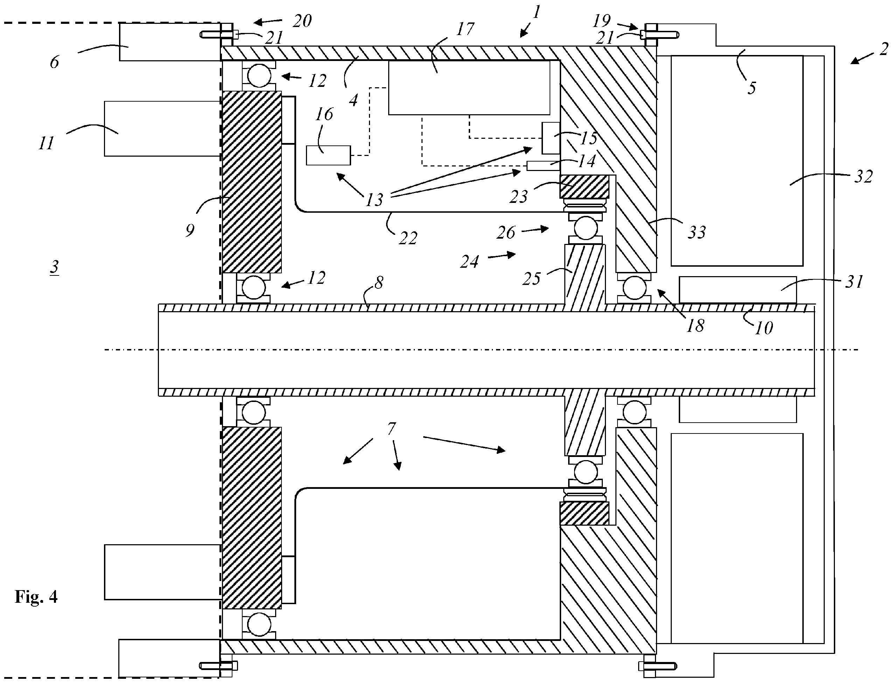

Die Figuren 1 und 4 zeigen ein erstes Ausführungsbeispiel eines erfindungsgemäßen Getriebemoduls 1 in einer schematischen Querschnittsdarstellung. Das Getriebemodul 1 ist dazu ausgebildet, einerseits an eine drehmomenteinspeisende Antriebsvorrichtung 2 und andererseits an ein anzutreibendes System 3 angekoppelt zu werden, was in Figur 4 schematisch dargestellt ist.

Das Getriebemodul 1 weist ein Getriebemodul-Drehmomentabstützelement 4 zur drehmomentabstützenden Verbindung mit einem Antriebsvorrichtungs-Drehmomentabstützelement 5 der drehmomenteinspeisenden Antriebsvorrichtung 2 und/oder mit einem System-Drehmomentabstützelement 6 des anzutreibenden Systems 3 auf.

Das Getriebemodul 1 weist außerdem ein Spannungswellengetriebe 7 mit einer Spannungswellengetriebe-Antriebswelle 8 und einer Spannungswellengetriebe-Abtriebswelle 9 auf, wobei die Spannungswellengetriebe-Antriebswelle 8 dazu ausgebildet und bestimmt ist, mit einer Abtriebswelle 10 der drehmomenteinspeisenden Antriebsvorrichtung drehfest verbunden zu sein, und wobei die Spannungswellengetriebe-Abtriebswelle 9 dazu ausgebildet und bestimmt ist, mit einer als Hohlwelle ausgebildeten Antriebswelle 11 des anzutreibenden Systems drehfest verbunden zu werden.

Die Spannungswellengetriebe-Abtriebswelle 9 ist mittels zweier Abtriebswellen-Wälzlager 12 relativ zu dem Getriebemodul-Drehmomentabstützelement 4 und relativ zu der Spannungswellengetriebe-Antriebswelle 8 rotierbar gelagert.

Das Getriebemodul 1 weist außerdem mehrere Messaufnehmer 13 auf, die dazu ausgebildet und angeordnet sind, eine getriebespezifische Eingangsgröße zu erfassen und ein elektrisches Messsignal zu erzeugen. Einer der Messaufnehmer 13 ist als Temperatursensor 14 ausgebildet. Ein weiterer der Messaufnehmer 13 ist als Beschleunigungssensor 15 ausgebildet. Ein weiterer der Messaufnehmer 13 ist als Drehmomentsensor 16 ausgebildet.

Das Getriebemodul 1 weist außerdem eine Auswerteelektronik 17 auf, die elektrisch an den Messaufnehmer 13 angeschlossen ist und die dazu ausgebildet ist, aus dem elektrischen Messsignal eine Ausgangsgröße zu erzeugen und auszugeben.

Die Spannungswellengetriebe-Antriebswelle 8 ist mittels eines Antriebswellen-Wälzlagers 18 relativ zu dem Getriebemodul-Drehmomentabstützelement 4 rotierbar gelagert. Das Getriebemodul-Drehmomentabstützelement weist eine Wand 33 mit einer mittig angeordneten Aufnahme auf, in der das Antriebswellen-Wälzlager 18 befestigt ist.

Das Getriebemodul-Drehmomentabstützelement 4 weist ein erstes Befestigungselement 19 zur Befestigung des Getriebemodul-Drehmomentabstützelements 4 an dem Antriebsvorrichtungs-Drehmomentabstützelement 5 auf. Das Getriebemodul-Drehmomentabstützelement 4 weist außerdem ein zweites Befestigungselement 20 zur Befestigung des Getriebemodul-Drehmomentabstützelements 4 an dem System-Drehmomentabstützelement 6 auf. Das erste Befestigungselement 19 und das zweite Befestigungselement 20 sind jeweils als Flansch mit Durchgangsbohrungen ausgebildet sein, was es ermöglicht das Getriebemodul-Drehmomentabstützelement 4 mittels Befestigungsschrauben 21, die durch die Durchgangsbohrungen verlaufen, an dem Antriebsvorrichtungs-Drehmomentabstützelement 5 bzw. dem System-Drehmomentabstützelement 6 zu befestigen.

Das Spannungswellengetriebe 7 weist einen hutförmigen Flexspline 22 auf, der drehfest mit der Spannungswellengetriebe-Abtriebswelle 9 verbunden ist. Das Spannungswellengetriebe 7 weist außerdem einen Circularspline 23 auf, der drehfest mit dem Getriebemodul-Drehmomentabstützelement 4 verbunden ist. Die Außenverzahnung des Flexsplines 22 steht, vorzugsweise an zwei einander gegenüberliegenden Stellen, mit der Innenverzahnung des Circularsplines 23 in Eingriff.

Das Spannungswellengetriebe 7 weist einen Wellengenerator 24 mit einem Antriebskern 25 und einem radialflexiblen Wälzlager 26 auf. Der Antriebskern 25 ist gemeinsam einstückig mit der Spannungswellengetriebe-Antriebswelle 8 ausgebildet.

Der in Figur 4 dargestellte Aktuator weist als anzutreibendes System 3 einen elektrischen Antriebsmotor 30 mit einem Rotor 31 und einem Stator 32 auf. Der Rotor 31 ist drehfest mit der Spannungswellengetriebe-Antriebswelle 8 verbunden, um ein Drehmoment von dem Antriebsmotor zu dem Spannungswellengetriebe 7 zu übertragen. Das Getriebemodul-Drehmomentabstützelement 4 ist zur drehmomentabstützenden Verbindung mit dem Antriebsvorrichtungs-Drehmomentabstützelement 5 verbunden.

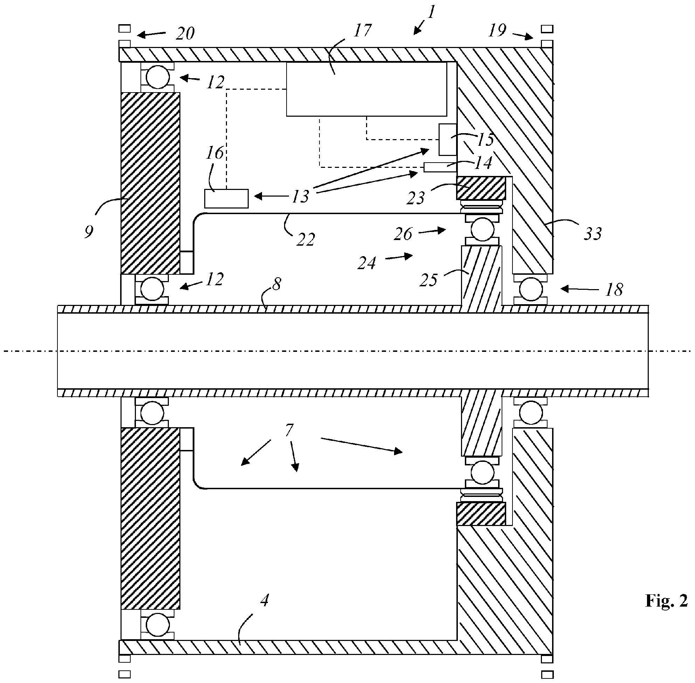

Figur 2 zeigt ein zweites Ausführungsbeispiel eines erfindungsgemäßen Getriebemoduls 1 in einer schematischen Querschnittsdarstellung. Das in Figur 2 dargestellte Getriebemodul 1 weist im Unterscheid zu dem in den Figuren 1 und 4 dargestellten Ausführungsbeispiel einen Flexspline 22 in Topfbauweise auf.

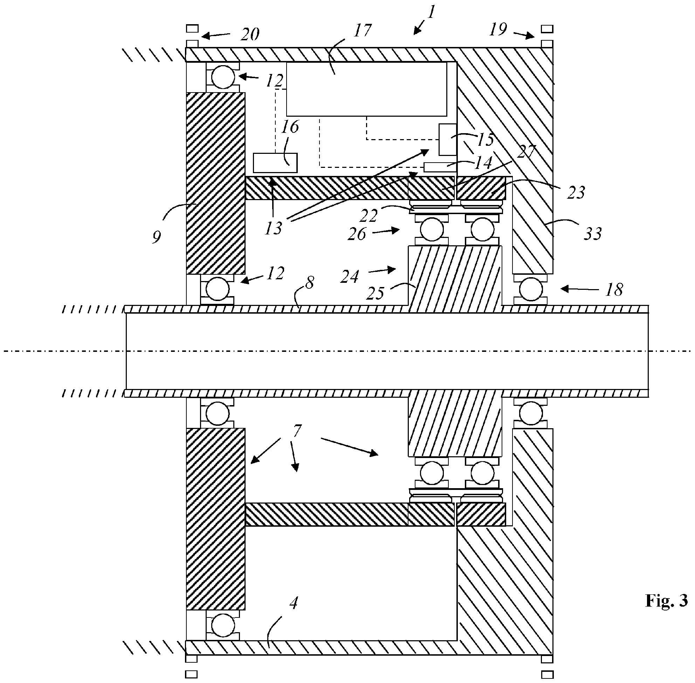

Die Figur 3 zeigt ein drittes Ausführungsbeispiel eines erfindungsgemäßen Getriebemoduls 1 in einer schematischen Querschnittsdarstellung.

Bei dieser Ausführung weist das Spannungswellengetriebe einen Circularspline 23 und einen Dynamicspline 27 auf. Bei dieser Ausführung ist der Flexspline 22 ringförmig ausgebildet und steht mit seiner Flexsplineverzahnung sowohl mit der Circularsplineverzahnung des Circularsplines 23 und der Dynamicsplineverzahnung des Dynamicsplines 27 in Zahneingriff. Die Spannungswellengetriebe-Abtriebswelle ist drehfest mit dem Dynamicspline 27 verbunden, während der Circularspline 23 drehfest mit dem Getriebemodul-Drehmomentabstützelement 4 verbunden ist.

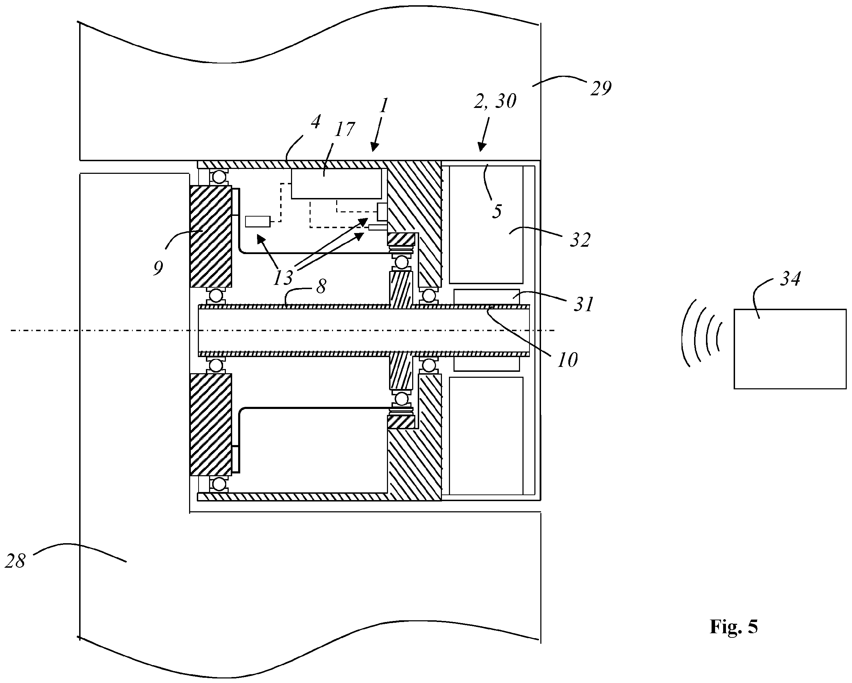

Die Figur 5 zeigt ein Ausführungsbeispiel eines Details einer erfindungsgemäßen Maschine, nämlich eines motorisierten Gelenks, das einen ersten Träger 28 und eine zweiten Träger 29 eines (ansonsten nicht weiter dargestellten) Roboterarmes gelenkig miteinander verbindet. Das Gelenk weist ein Getriebemodul 1, wie es in Figur 1 dargestellt ist, gemäß dem ersten Ausführungsbeispiel und einen elektrischen Antriebsmotor 30 auf.

Die Spannungswellengetriebe-Abtriebswelle 9 ist drehfest mit dem ersten Träger 28 verbunden. Das Getriebemodul-Drehmomentabstützelement 4 ist fest mit dem zweiten Träger 29 verbunden. Wenn der elektrische Antriebsmotor bestromt wird, kommt es zu einer Schwenkbewegung der Träger 28, 29 relativ zueinander.

Der Roboter weist eine Steuerungselektronik 34 auf (nur schematisch dargestellt, die drahtlos mit der Auswerteelektronik 17 verbunden ist, um Ausgangsgrößen von der Auswerteelektronik 17 zu empfangen. Die Steuerungselektronik 34 kann dazu ausgebildet und eingerichtet sein, das Getriebemodul 1 und/oder die drehmomenteinspeisende Antriebsvorrichtung in Abhängigkeit von der empfangenen Ausgangsgröße bzw. den empfangenen Ausgangsgrößen zu steuern oder zu regeln.

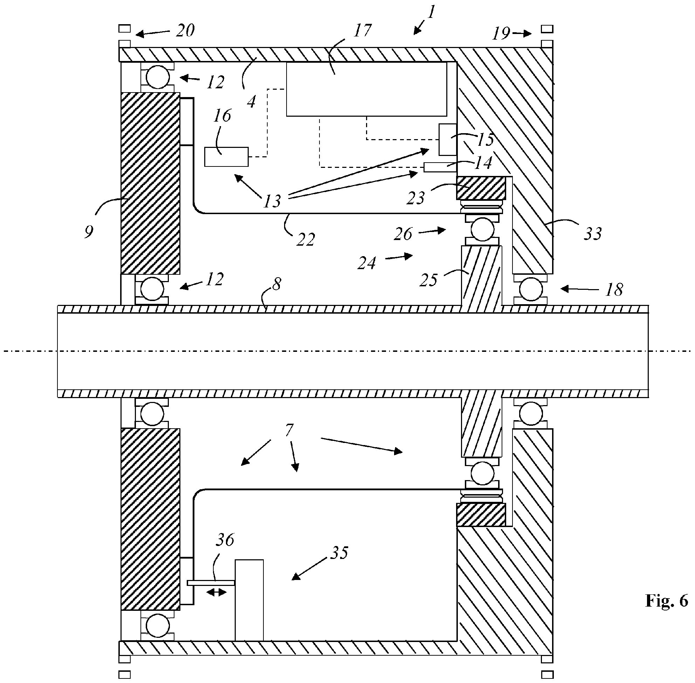

Die Figur 6 zeigt ein viertes Ausführungsbeispiel eines erfindungsgemäßen Getriebemoduls in einer schematischen Querschnittsdarstellung. Das vierte Ausführungsbeispiel unterscheidet sich von dem ersten Ausführungsbeispiel durch eine von der Auswerteelektronik 17 (und/oder durch eine Steuerungselektronik eines angetriebenen Systems) gesteuerte Sperrvorrichtung 35. Die Sperrvorrichtung 35 weist einen axial bewegbaren Sperrenstift auf, der in der Blockierstellung in eine Ausnehmung des Flexsplines 22 eingreift.

### Bezugszeichenliste:

- 1: Getriebemodul
- 2: Antriebsvorrichtung
- 3: anzutreibendes System
- 4: Getriebemodul-Drehmomentabstützelement
- 5: Antriebsvorrichtungs-Drehmomentabstützelement
- 6: System-Drehmomentabstützelement
- 7: Spannungswellengetriebe
- 8: Spannungswellengetriebe-Antriebswelle
- 9: Spannungswellengetriebe-Abtriebswelle
- 10: Abtriebswelle
- 11: Antriebswelle
- 12: Abtriebswellen-Wälzlager
- 13: Messaufnehmer
- 14: Temperatursensor
- 15: Beschleunigungssensor
- 16: Drehmomentsensor
- 17: Auswerteelektronik
- 18: Antriebswellen-Wälzlager
- 19: erstes Befestigungselement
- 20: zweites Befestigungselement
- 21: Befestigungsschraube
- 22: Flexspline
- 23: Circularspline
- 24: Wellengenerator
- 25: Antriebskern
- 26: radialflexibles Wälzlager
- 27: Dynamicspline
- 28: erster Träger
- 29: zweiter Träger
- 30: Antriebsmotor
- 31: Rotor
- 32: Stator
- 33: Wand
- 34: Steuerungselektronik
- 35: Sperrvorrichtung
- 36: Sperrenstift

## Patentansprüche

1. Getriebemodul (1), das dazu ausgebildet ist, als fertig montierte und funktionsfähige Baueinheit einerseits an eine drehmomenteinspeisende Antriebsvorrichtung (2) und andererseits an ein anzutreibendes System (3) angekoppelt zu werden, ohne hierfür Teile des Getriebemoduls demontieren zu müssen, wobei das Getriebemodul (1) aufweist:
a. ein Getriebemodul-Drehmomentabstützelement (4) zur direkten oder indirekten drehmomentabstützenden Verbindung mit einem Antriebsvorrichtungs-Drehmomentabstützelement (5) der drehmomenteinspeisenden Antriebsvorrichtung (2), insbesondere einem Motorgehäuse der drehmomenteinspeisenden Antriebsvorrichtung (2), und
b. ein Spannungswellengetriebe (7) mit einer Spannungswellengetriebe-Antriebswelle (8) und einer Spannungswellengetriebe-Abtriebswelle (9), wobei
i. die Spannungswellengetriebe-Antriebswelle (8) dazu ausgebildet und bestimmt ist, mit einer Abtriebswelle (10) der drehmomenteinspeisenden Antriebsvorrichtung (2) drehfest verbunden zu werden, und wobei die Spannungswellengetriebe-Abtriebswelle (9) dazu ausgebildet und bestimmt ist, mit einer Antriebswelle (11) des anzutreibenden Systems (3) drehfest verbunden zu werden, und wobei
ii. die Spannungswellengetriebe-Abtriebswelle (9) mittels wenigstens eines Abtriebswellen-Wälzlagers (12) direkt oder indirekt relativ zu dem Getriebemodul-Drehmomentabstützelement (4) und/oder direkt oder indirekt relativ zu der Spannungswellengetriebe-Antriebswelle (8) rotierbar gelagert ist,
c. wenigstens einen Messaufnehmer (13), der dazu ausgebildet und angeordnet ist, eine getriebespezifische Eingangsgröße zu erfassen und ein elektrisches Messsignal zu erzeugen, und
d. eine an einem Bauteil des Getriebemoduls befestigte Auswerteelektronik, die elektrisch an den Messaufnehmer (13) angeschlossen ist und die dazu ausgebildet, aus dem elektrischen Messsignal wenigstens eine Ausgangsgröße zu erzeugen.

2. Getriebemodul (1) nach Anspruch 1, **dadurch gekennzeichnet, dass**
a. das Getriebemodul-Drehmomentabstützelement (4) ein erstes Befestigungselement (19) zur Befestigung des Getriebemodul-Drehmomentabstützelements (4) an dem Antriebsvorrichtungs-Drehmomentabstützelement (5) aufweist, und/oder dass
b. das Getriebemodul-Drehmomentabstützelement (4) ein zweites Befestigungselement (20) zur Befestigung des Getriebemodul-Drehmomentabstützelements (4) an dem System-Drehmomentabstützelement (6) aufweist.

3. Getriebemodul (1) nach Anspruch 1 oder 2, **dadurch gekennzeichnet, dass** die Auswerteelektronik (17) in dem Spannungswellengetriebe (7) angeordnet ist und/oder dass die Auswerteelektronik (17) an dem Getriebemodul-Drehmomentabstützelement (4) befestigt ist.

4. Getriebemodul (1) nach einem der Ansprüche 1 bis 3, **dadurch gekennzeichnet, dass**
a. das Getriebemodul-Drehmomentabstützelement (4) wenigstens teilweise als Gehäuse oder als Teil eines Gehäuses ausgebildet ist, oder dass
b. das Getriebemodul-Drehmomentabstützelement (4) wenigstens teilweise als Gehäuse oder als Teil eines Gehäuses ausgebildet ist, wobei das Gehäuse das Spannungswellengetriebe (7) und/oder den Messaufnehmer (13) und/oder die Auswerteelektronik (17) einhaust.

5. Getriebemodul (1) nach einem der Ansprüche 1 bis 4, **dadurch gekennzeichnet, dass** das Getriebemodul wenigstens eines der folgenden Merkmale a bis g aufweist:
a. die Eingangsgröße ist von einer Temperatur, insbesondere einer Temperatur der Spannungswellengetriebe-Antriebswelle (8) oder einer Temperatur der Spannungswellengetriebe-Abtriebswelle (9) oder einer Temperatur des Circularsplines oder einer Temperatur des Flexsplines (22) oder einer Temperatur des Wellengenerators, abhängig,
b. die Eingangsgröße ist von einem Drehmoment, insbesondere einem auf die Spannungswellengetriebe-Antriebswelle (8) oder die Spannungswellengetriebe-Abtriebswelle (9) oder den Circularspline (23) oder den Flexspline (22) oder den Wellengenerator wirkenden Drehmoment, abhängig,
c. die Eingangsgröße ist von einer Vibration, insbesondere einer Vibration der Spannungswellengetriebe-Antriebswelle (8) oder einer Vibration der Spannungswellengetriebe-Abtriebswelle (9) oder einer Vibration des Circularsplines (23) oder einer Vibration des Flexsplines (22) oder einer Vibration des Wellengenerators (24), abhängig,
d. die Eingangsgröße ist von einer Beschleunigung, insbesondere einer Beschleunigung der Spannungswellengetriebe-Antriebswelle (8) oder einer Beschleunigung der Spannungswellengetriebe-Abtriebswelle (9) oder einer Beschleunigung des Circularsplines (23) oder einer Beschleunigung des Flexsplines (22) oder einer Beschleunigung des Wellengenerators (24), abhängig,
e. die Eingangsgröße ist von einem Drehwinkel, insbesondere einem Drehwinkel der Spannungswellengetriebe-Antriebswelle (8) oder einem Drehwinkel der Spannungswellengetriebe-Abtriebswelle (9) oder einem Drehwinkel des Circularsplines (23) oder einem Drehwinkel des Flexsplines (22) oder einem Drehwinkel des Wellengenerators (24), abhängig,
f. die Eingangsgröße ist von einer Drehzahl, insbesondere einer Drehzahl der Spannungswellengetriebe-Antriebswelle (8) oder einer Drehzahl der Spannungswellengetriebe-Abtriebswelle (9) oder einer Drehzahl des Circularsplines (23) oder einer Drehzahl des Flexsplines (22) oder einer Drehzahl des Wellengenerators (24), abhängig,
g. die Auswerteelektronik (17) erfasst die elektrischen Messsignale des wenigstens einen Messaufnehmers in Abhängigkeit von der Zeit.

6. Getriebemodul (1) nach einem der Ansprüche 1 bis 5, **dadurch gekennzeichnet, dass** das Getriebemodul wenigstens eines der folgenden Merkmale a bis e aufweist:
a. es sind mehrere Messaufnehmer (13) vorhanden, von denen jeder dazu ausgebildet, eingerichtet und angeordnet ist, eine getriebespezifische Eingangsgröße zu erfassen und ein elektrisches Messsignal zu erzeugen.
b. es sind mehrere Messaufnehmer (13) vorhanden, die unterschiedlichartige Eingangsgrößen erzeugen,
c. es sind mehrere Messaufnehmer (13) vorhanden, die an unterschiedlichen Getriebebauteilen angeordnet sind,
d. die Auswerteelektronik (17) empfängt die elektrischen Messsignale von mehreren Messaufnehmern (13) und berücksichtigt diese gemeinsam bei der Erzeugung des Ausgangssignales,
e. die Auswerteelektronik (17) erzeugt mehrere unterschiedliche Ausgangsgrößen.

7. Getriebemodul (1) nach einem der Ansprüche 1 bis 6, **dadurch gekennzeichnet, dass** das Getriebemodul wenigstens eines der folgenden Merkmale a bis d aufweist:
a. das Abtriebswellen-Wälzlager ist als Kreuzrollenlager oder als zweireihiges Kegelrollenlager ausgebildet,
b. das Antriebswellen-Wälzlager ist als Kreuzrollenlager oder als zweireihiges Kegelrollenlager ausgebildet,
c. die Spannungswellengetriebe-Antriebswelle (8) ist als Hohlwelle ausgebildet,
d. die axiale Länge des Getriebemoduls (1) ist kleiner als der radiale Durchmesser des Getriebemoduls (1).

8. Getriebemodul (1) nach einem der Ansprüche 1 bis 7, **dadurch gekennzeichnet, dass**
a. das Getriebemodul-Drehmomentabstützelement (4) zur direkten oder indirekten drehmomentabstützenden Verbindung mit einem System-Drehmomentabstützelement (6) des anzutreibenden Systems (3) ausgebildet ist, oder dass
b. das gesamte Getriebemodul (1) als fertig montierte und funktionsfähige Baueinheit an ein anzutreibendes System (3), ankoppelbar ist, ohne hierfür Teile des Getriebemoduls demontieren zu müssen.

9. Getriebemodul (1) nach einem der Ansprüche 1 bis 8, **dadurch gekennzeichnet, dass** eine Sperrvorrichtung vorhanden ist, die wahlweise in eine Freigabestellung, in der die Spannungswellengetriebe-Abtriebswelle (9) relativ zu dem Getriebemodul-Drehmomentabstützelement (4) rotierbar ist, oder eine Blockierstellung, in der die Sperrvorrichtung eine Rotation der Spannungswellengetriebe-Abtriebswelle (9) relativ zu dem Getriebemodul-Drehmomentabstützelement (4) blockiert, schaltbar ist, wobei die Auswerteelektronik (17) die Sperrvorrichtung automatisch in die Blockierstellung schaltet, wenn ein vorgegebener Grenzwert der Ausgangsgröße überschritten oder unterschritten wird.

10. Getriebemodul (1) nach einem der Ansprüche 1 bis 9, **dadurch gekennzeichnet, dass**
a. das Getriebemodul (1) ein Mittel zum Verändern der Vorspannung des Spannungswellengetriebes (7) aufweist, und dass
b. die Auswerteelektronik (17) automatisch die Vorspannung des Spannungswellengetriebes (7) verändert, wenn ein vorgegebener Grenzwert der Ausgangsgröße überschritten oder unterschritten wird oder wenn sie ein entsprechendes Steuerungssignal empfängt.

11. Aktuator beinhaltend ein Getriebemodul (1) nach einem der Ansprüche 1 bis 10 sowie eine drehmomenteinspeisende Antriebsvorrichtung (2), die an das Getriebemodul (1) derart angekoppelt ist, dass das Getriebemodul-Drehmomentabstützelement (4) drehfest mit dem Antriebsvorrichtungs-Drehmomentabstützelement (5) verbunden ist und die Spannungswellengetriebe-Antriebswelle (8) drehfest mit der Abtriebswelle der drehmomenteinspeisenden Antriebsvorrichtung (2) verbunden ist.

12. Aktuator nach Anspruch 11, **dadurch gekennzeichnet, dass** die Auswerteelektronik (17) die Ausgangsleistung der Antriebsvorrichtung (2) automatisch reduziert, wenn ein vorgegebener Grenzwert der Ausgangsgröße überschritten oder unterschritten wird.

13. Maschine beinhaltend einen Aktuator nach einem der Ansprüche 11 oder 12 sowie ein anzutreibendes System (3), das an das Getriebemodul (1) derart angekoppelt ist, dass das Getriebemodul-Drehmomentabstützelement (4) drehfest mit dem System-Drehmomentabstützelement (6) verbunden ist und die Spannungswellengetriebe-Abtriebswelle (9) drehfest mit der Antriebswelle des anzutreibenden Systems (3) verbunden ist.

14. Maschine nach Anspruch 13, **dadurch gekennzeichnet, dass** die Maschine eine Steuerungselektronik (34) und wenigstens eines der folgenden Merkmale a bis h aufweist:
a. die Steuerungselektronik (34) ist an die Auswerteelektronik (17) angeschlossen und dazu ausgebildet und eingerichtet, die Ausgangsgröße bzw. die Ausgangsgrößen von der Auswerteelektronik (17) zu empfangen,
b. die Auswerteelektronik (17) ist dazu ausgebildet und eingerichtet, Steuerungssignale von der Steuerungselektronik (34) zu empfangen,
c. die Steuerungselektronik (34) ist dazu ausgebildet und eingerichtet ist, das Getriebemodul (1) und/oder die drehmomenteinspeisende Antriebsvorrichtung (2) in Abhängigkeit von der empfangenen Ausgangsgröße bzw. den empfangenen Ausgangsgrößen zu steuern oder zu regeln,
d. die Steuerungselektronik (34) reduziert die Ausgangsleistung der drehmomenteinspeisenden Antriebsvorrichtung (2) automatisch, wenn ein vorgegebener Grenzwert der Ausgangsgröße überschritten oder unterschritten wird,
e. die Steuerungselektronik (34) schaltet die drehmomenteinspeisende Antriebsvorrichtung (2) automatisch ab, wenn ein vorgegebener Grenzwert der Ausgangsgröße überschritten oder unterschritten wird,
f. die Steuerungselektronik (34) verändert automatisch die Vorspannung des Spannungswellengetriebes (7), wenn ein vorgegebener Grenzwert der Ausgangsgröße überschritten oder unterschritten wird,
g. die Steuerungselektronik (34) schaltet automatisch die Sperrvorrichtung in die Blockierstellung, wenn ein vorgegebener Grenzwert der Ausgangsgröße überschritten oder unterschritten wird,
h. die Steuerungselektronik (34) ist dazu ausgebildet und eingerichtet, insbesondere optisch und/oder akustisch, eine Information, insbesondere eine Handlungsempfehlung und/oder eine Prognose über ein künftiges Verhalten oder eine künftige Eigenschaft des Getriebemoduls, an einen Benutzer auszugeben.

15. Maschine nach einem der Ansprüche 13 oder 14, **dadurch gekennzeichnet, dass** die Maschine als ein programmierbarer Bewegungsautomat, insbesondere als Industrieroboter, oder als Fahrzeug, insbesondere als Personenkraftwagen oder als Lastkraftwagen, oder als Teil eines Fahrzeuges, insbesondere als Aktives Fahrwerk oder als aktive Lenkung, ausgebildet ist.
